(19) Europäisches Patentamt
European Patent Office
Office européen des brevets

(11) Publication number: **0 209 376 B1**

(12) **EUROPEAN PATENT SPECIFICATION**

(45) Date of publication of patent specification: **07.10.92** (51) Int. Cl.$^5$: **H01G 9/02**

(21) Application number: **86305476.3**

(22) Date of filing: **16.07.86**

# (54) An electrolyte for electrolytic capacitor.

(30) Priority: **17.07.85 JP 155943/85**
**17.08.85 JP 180045/85**

(43) Date of publication of application:
**21.01.87 Bulletin 87/04**

(45) Publication of the grant of the patent:
**07.10.92 Bulletin 92/41**

(84) Designated Contracting States:
**DE FR GB NL**

(56) References cited:
**GB-A- 1 152 530**
**US-A- 3 700 975**

**CHEMICAL ABSTRACTS, vol. 105, no. 12, 22nd September 1986, abstract no. 106931f, Columbus, Ohio, US; & JP-A-61 32 509**

(73) Proprietor: **NIPPON CHEMI-CON CORPORATION**
**No. 167-1, Higashi Ome 1-chome**
**Ome-shi Tokyo(JP)**

(72) Inventor: **Shinozaki, Fumihiko c/o Nippon Chemi-Con Corp.**
**167-1, 1-chome**
**Higashi-Ome Ome-shi Tokyo(JP)**
Inventor: **Yokoyama, Yutaka c/o Nippon Chemi-Con Corp.**
**167-1, 1-chome**
**Higashi-Ome Ome-shi Tokyo(JP)**

(74) Representative: **Bannerman, David Gardner et al**
**Withers & Rogers 4 Dyer's Buildings Holborn**
**London, EC1N 2JT(GB)**

EP 0 209 376 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an electrolytic capacitor containing a tetrafluoroborate of an organic amine compound dissolved in an aprotic solvent, and also to an electrolyte for use in an electrolytic capacitor.

Hitherto, organic acids or their salts and glycol series pastes have been principally used as electrolytes for electrolytic capacitors for general purposes. The latest expansion in utilization of electronic instruments requires further improvements in the reliability and performance of capacitors which at present suffer from the presence of undesired water in the paste and as a result an electrolyte utilising an aprotic solvent in place of an organic acid and a salt thereof and glycol paste has become attractive.

The greatest obstacle to the employment of an aprotic solvent system electrolyte is the difficulty of obtaining an electrolyte of high conductivity and to achieve this an organic carboxylic acid or salt thereof which are highly soluble in aprotic solvents and which display a high degree of dissociation have been studied but success has not yet been achieved. To solve this problem and obtain a solvent with high conductivity a solvent has been tried which produces water by the reaction between an acid and an alcohol or glycol so that water is incorporated into the aprotic solvent, but this has not achieved sufficient conductivity and the resulting solvent exhibits poor reliability at elevated temperature as disclosed in the Japanese patent publications Nos. 55-3989, 57-56763, 58-32769 and the U.S. Patent No. 4,117,531.

After extensive research with a view to obtaining an electrolyte which is substantially nonaqueous and has a high conductivity with use of an aprotic solvent but without using any solvent in which water is formed by reaction between acids and alcohols or glycols, we have discovered that an organic amine salt of a tetrafluoroborate has a high solubility in aprotic solvents with enhanced dissociation and displays high conductivity.

According to one feature of the invention we provide an electrolytic capacitor containing a tetrafluoroborate of an organic amine compound as a solute dissolved in an aprotic solvent.

According to another feature of the invention we provide an electrolyte for an electrolytic capacitor, wherein said organic amine compound comprises (i) a compound containing one or two pyridine rings or (ii) a primary, secondary or tertiary amine or a quaternary ammonium compound in which in group (ii) to a nitrogen atom are bonded four groups selected from 1 to 4 alkyl groups, an alkenyl group or an aryl group and 1 to 3 hydrogen atoms.

The organic amine compounds for use in the capacitor of the invention preferably contain one or two pyridine rings, as follows:

(1) Pyridine compounds in which one or more hydrogen atoms bonded to the pyridine carbon are replaced by alkyl groups, alkenyl groups having 1 to 15 carbons, aryl groups having 6 to 15 carbons or halogen, for example:
$\alpha$-picoline, $\beta$-picoline, $\gamma$-picoline , 2-ethylpyridine, 3-ethylpyridine, 4-ethylpyridine, 2-n-propylpyridine, 2-iso-propylpyridine, 2-n-octylpyridine, 2-vinylpyridine, 2-hexene-2-pyridine, 2-geranylpyridine, 2,3-dimethylpyridine, 2,6-dimethylpyridine, 3,4-dimethylpyridine, 3-ethyl-4-methylpyridine, 4-ethyl-2-methylpyridine, 6-ethyl-2-methylpyridine, 2,3,4-trimethylpyridine, 2,3,6-trimethylpyridine, 2,4,5-trimethylpyridine, 2,4,6-trimethylpyridine, 2-ethyl-3,5-dimethylpyridine, 2-phenylpyridine, 4-tolylpyridine, 4-mesitylpyridine, 3-chloropyridine, 3,5-dibromopyridine.

(2) Dipyridine compounds, in which one or more hydrogen atoms bonded to the pyridine ring are substituted by alkyl, alkenyl, aryl or halogen groups, for example:
2,2-diethyl-4,4-dipyridine, 4,4-dimethyl-2,2-dipyridine.

(3) Compounds in which two pyridine rings are bonded by alkylene group having 1 to 8 carbons or an alkenylene group having 2 to 8 carbons, for example:
1,3-di-(4-pyridine)-propane, 1,2-di-(4-pyridyl)ethane 1,2-di-(4-pyridyl)-ethylene, 1,6-di-(4-pyridyl)-hexylene-3.

(4) Quaternary ammonium compounds in which to one nitrogen atom of a pyridine ring are bonded an alkyl group, alkenyl group having 1 to 15 carbons or aryl group having 6 to 15 carbons, for example:
N-ethyl-2-bromopyridine, N-vinyl-3,5-dimethylpyridine, N-phenyl-4-ethylpyridine, N-tolyl-4-butylpyridine.

Further, the organic amine compound for use in the invention may be selected from primary, secondary and tertiary amines and quaternary ammonium compounds in which to the nitrogen atom are added 1 to 4 alkyl groups or alkenyl groups having 1 to 15 carbons, or aryl groups having 6 to 15 carbons and 1 to 3 hydrogen atoms, for example:

(1) Primary amines :
methylamine, ethylamine, propylamine, iso-propylamine, butylamine, amylamine, hexylamine, vinylamine, geranylamine, aniline, benzylamine.

(2) Secondary amines :

dimethylamine, diethylamine, dipropylamine, diisopropylamine, divinylamine, digeranylamine, diphenylamine, ditolylamine, N-methyl·benzylamine.

(3) Tertiary amines :

trimethylamine, triethylamine, tripropylamine, tributylamine, trivinylamine, trigeranylamine, triphenylamine, N-dimethyl·benzylamine.

(4) Quaternary ammonium compounds :

tetramethylammonium, N-butylammonium, vinyl trimethylammonium, phenylammonium, phenyltrimethyltriethylammonium, benzyltrimethylammonium.

Moreover, the organic amine compound for use in the invention may be selected from compounds having the general formula:

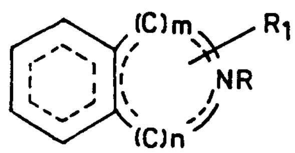

in which n is 0 to 1, m + n is 2 or 3, R1 is presence or absence of an alkyl substituent having up to 3 carbon atoms, and R is hydrogen or an N-heterocyclic-di-condensed ring compound in which the nitrogen atom forms a tertiary amine or a quaternary ammonium with one or two alkyl groups having 1 to 5 carbon atoms and up to 5 conjugated double bonds are contained in the ring:

N-heterocyclic-di-condensed ring compound may be selected from quinoline, 2-methylquinoline-(quinaldine), isoquinoline, and their partially or completely hydrogenated compounds, (e.g. n-alkylates, indole), 3-methylindole(skatol), isoindole, pseudoindole and their partially or completely hydrogenated compounds (e.g. N-alkyl compounds).

The aprotic solvent to be used in the invention may be selected from the following but is not limited thereto:

(1) Amide system solvent:

N-methylformamide, N-dimethylformamide, N-ethylformamide, N-diethylformamide, N-methylacetoamide, N-dimethylacetoamide, N-ethylacetoamide, N-diethylacetoamide, hexamethylphosphorinamide

(2) Oxide compounds :

di-methylsulfoxide

(3) Nitrile compounds :

acetonitrile

(4) Cyclic esters, cyclicamides :

γ-butyrolactone, N-methyl-2-pyrrolidone, ethylenecarbonate, propylenecarbonate.

The invention will now be illustrated by way of non-limiting examples:

(Examples 1 to 12)

An electrolyte for an electrolytic capacitor according to the invention and utilising a 10% by weight solution of tetrafluoroborates of various organic amine compounds was tested with respect to conductivity and sparking voltage as shown in Table 1.

TABLE 1

| Example | Organic Amine Compounds | Aprotic Solvent | Conductivity(ms/cm) | Sparking Voltage(V) |
|---|---|---|---|---|
| 1 | 2,6-dimethyl-pyridine 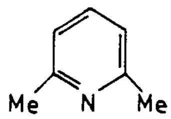 | N-dimethyl-formamide | 22 | 40 |
| 2 | 4,4'-dimethyl-2,2'-dipyridyl 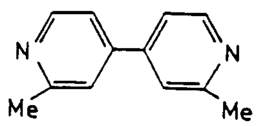 | propylene carbonate | 6.7 | 50 |

| | | | | |
|---|---|---|---|---|
| 3 | 1,2-di-(4-pyridyl)-ethylene 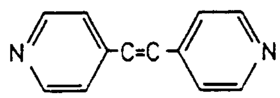 | N-ethylform-amide | 14.7 | 60 |
| 4 | 4-tolyl-pyridine 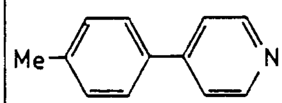 | N-dimethyl-acetoamide | 13.0 | 50 |
| 5 | N-ethyl-2-bromopyridine 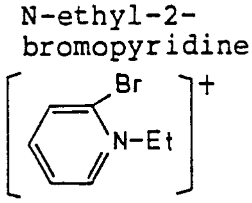 | N-methyl-2-pyrrolidone | 10.2 | 50 |
| 6 | N-phenyl-4-ethylpyridine 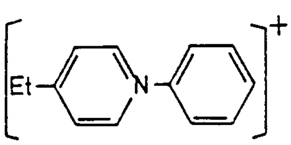 | dimethyl-sulfoxide | 12.2 | 50 |
| 7 | tributylamine 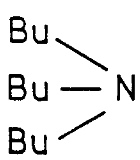 | ethylene-carbonate | 6.9 | 60 |
| 8 | diphenylamine 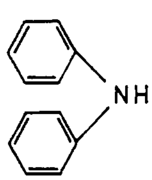 | hexamethyl phosphorin-amide | 6.9 | 40 |

| | | | | |
|---|---|---|---|---|
| 9 | geranylamine 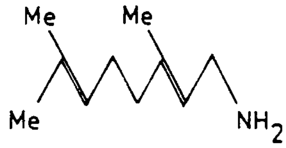 | acetonitrile | 12.5 | 40 |
| 10 | n-butyl-ammonium 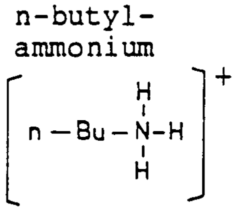 | γ-butyroloactone | 7.6 | 50 |
| 11 | vinyltrimethyl ammonium 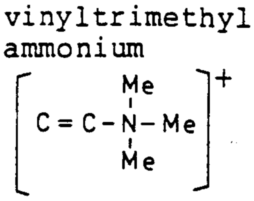 | N-methylaceto-amide | 10.5 | 50 |
| 12 | phenyltri-methyl-ammonium 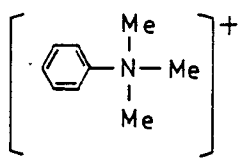 | N-methylform amide | 11.1 | 50 |
| Ref. | ethyleneglycol<br>water<br>ammonium adipate | 78% by weight<br>12% by weight<br>10% by weight | 6.7 | |

(N.B.) In the formulae Me is methyl, Et is ethyl, Bu is butyl.

Results obtained at 25V 1 micro F for the electrolytes shown in examples 1 to 12 are given in Table 2.

TABLE 2

| Example | Initial Value | | | 110 deg.C 1000 hours | | |
|---|---|---|---|---|---|---|
| | Capacity | tan δ (%) | Leakage Current (μA/min.) | Capacity | tan δ (%) | Leakage Current (μA/min.) |
| 1 | 1.08 | 0.013 | 0.38 | 1.01 | 0.045 | 0.03 |
| 2 | 1.03 | 0.052 | 0.22 | 1.02 | 0.066 | 0.04 |
| 3 | 1.07 | 0.023 | 0.25 | 1.05 | 0.028 | 0.04 |
| 4 | 1.07 | 0.026 | 0.27 | 1.03 | 0.033 | 0.06 |
| 5 | 1.06 | 0.033 | 0.34 | 1.04 | 0.034 | 0.05 |
| 6 | 1.07 | 0.027 | 0.30 | 1.03 | 0.031 | 0.04 |
| 7 | 1.02 | 0.054 | 0.29 | 1.01 | 0.060 | 0.03 |
| 8 | 1.03 | 0.053 | 0.35 | 1.02 | 0.062 | 0.03 |
| 9 | 1.07 | 0.026 | 0.33 | 1.02 | 0.040 | 0.05 |
| 10 | 1.05 | 0.047 | 0.30 | 1.01 | 0.051 | 0.02 |
| 11 | 1.06 | 0.033 | 0.28 | 1.03 | 0.035 | 0.03 |
| 12 | 1.06 | 0.031 | 0.31 | 1.04 | 0.033 | 0.05 |
| (Ref.) | 1.02 | 0.054 | 0.40 | 0.93 | 0.075 | 0.07 |

(Examples 13 to 24)

Electrolytes for electrolytic capacitors according to the invention with a 10% by weight solution of tetrafluoroborates of various N-heterocyclic-di-condensed ring compounds were tested with respect to conductivity, as shown in Table 3.

Further, as comparative examples results obtained with a conventional standard electrolyte composed of 78% by weight of ethyleneglycol, 12% by weight of water and 10% by weight of ammonium adipate are shown in Table 3.

TABLE 3

| Example | N-hetrocyclic-di-condensed ring Tetrafluoroborate | Aprotic Solvent | Conductivity (ms/cm) |
|---|---|---|---|
| 13 | quinoline tetrafluoroborate 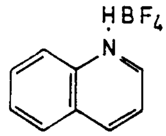 | N-dimethyl-formamide | 10.5 |
| 14 | quinaldine tetra-fluoroborate 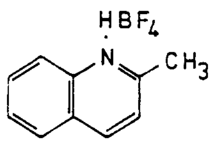 | propylene-carbonate | 8.3 |
| 15 | 1,2,3,4-tetra-hydroquinoline-tetrafluoroborate 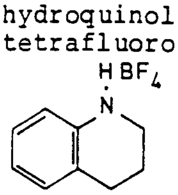 | N-ethylform-amide | 11.1 |
| 16 | tetrafluoroboric-acid diethyldeca-hydroquinolinium 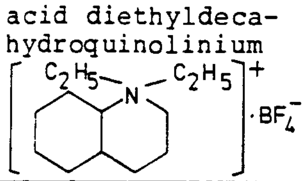 | N-dimethyl-acetoamide | 10.3 |
| 17 | tetrafluoroboric acid methyl-quinolinium 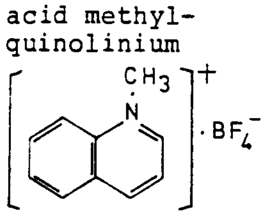 | N-methyl-2-pyrrolidone | 12.0 |
| 18 | isoquinoline tetra-fluoroborate 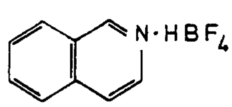 | γ-butyrolactone | 10.0 |

| | | | |
|---|---|---|---|
| 19 | indole tetra- fluoroborate 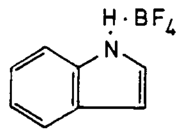 | ethylene- carbonate | 7.1 |
| 20 | skatol tetra- fluoroborate 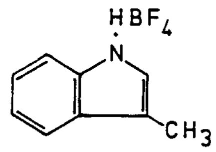 | hexamethyl- phosphorinamide | 7.0 |
| 21 | 2,3-dihydroindole tetrafluoroborate 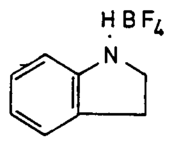 | acetonitrile | 12.5 |
| 22 | tetrafluoroboric propylindolinium 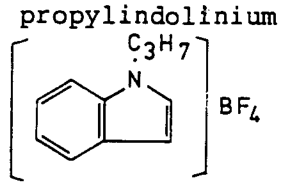 | dimethyl- sulfoxide | 8.3 |
| 23 | isoindole tetrafluoroborate 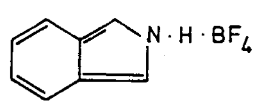 | N-methylaceto- amide | 10.5 |
| 24 | pseudoindole tetrafluoroborate 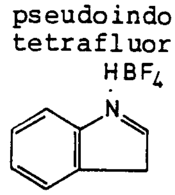 | N-methylform- amide | 8.7 |
| Ref. | ethyleneglycol 78% by weight water 12% by weight ammonium adipate 10% by weight | | 6.7 |

The characteristics over a period of time of the electrolytes shown in Examples 13 to 24 and the comparative example are shown in Table 4.

TABLE 4

| Example | Initial Value | | | 110 deg.C 1000 hours | | |
|---|---|---|---|---|---|---|
| | Capacity (μF) | tan δ (%) | Leakage Current (μA) | Capacity C(%) | tan δ (%) | Leakage Current (μA) |
| 13 | 22.5 | 0.031 | 0.22 | -1.3 | 0.041 | 0.08 |
| 14 | 22.5 | 0.033 | 0.23 | -1.6 | 0.035 | 0.07 |
| 15 | 22.6 | 0.031 | 0.25 | -0.1 | 0.038 | 0.08 |
| 16 | 22.6 | 0.032 | 0.23 | -0.7 | 0.034 | 0.10 |
| 17 | 22.8 | 0.029 | 0.27 | -0.5 | 0.032 | 0.07 |
| 18 | 22.8 | 0.031 | 0.21 | -0.4 | 0.038 | 0.06 |
| 19 | 22.4 | 0.035 | 0.23 | -1.2 | 0.040 | 0.10 |
| 20 | 22.4 | 0.035 | 0.24 | -1.5 | 0.042 | 0.12 |
| 21 | 22.8 | 0.029 | 0.28 | -3.4 | 0.040 | 0.15 |
| 22 | 22.3 | 0.034 | 0.23 | -1.1 | 0.038 | 0.09 |
| 23 | 22.7 | 0.031 | 0.25 | -0.3 | 0.035 | 0.07 |
| 24 | 22.5 | 0.033 | 0.26 | -0.2 | 0.035 | 0.07 |
| Ref. | 22.4 | 0.036 | 0.35 | -5.6 | 0.055 | 0.18 |

The electrolytes according to the invention are non-aqueous electrolytes having a high conductivity, equivalent to or greater than that of conventional electrolytes composed of glycols, water and organic acid salts, with improved applicability in electrolytic capacitors.

## Claims

**1.** An electrolytic capacitor containing a tetrafluoroborate of an organic amine compound as a solute dissolved in an aprotic solvent.

**2.** An electrolyte for an electrolytic capacitor according to claim 1, wherein said organic amine compound comprises (i) a compound containing one or two pyridine rings or (ii) a primary, secondary or tertiary amine or a quaternary ammonium compound in which in group (ii) to a nitrogen atom are bonded four groups selected from 1 to 4 alkyl groups, an alkenyl group or an aryl group and 1 to 3 hydrogen atoms.

**3.** An electrolyte for an electrolytic capacitor according to claim 2, wherein said compound containing one or two pyridine rings is a compound in which at least one hydrogen atom bonded to a carbon of a pyridine ring is replaced by an alkyl group, alkenyl group, aryl group or halogen.

**4.** An electrolyte for an electrolytic capacitor according to claim 2 or 3, wherein said compound containing two pyridine rings includes a dipyridyl compound or a compound in which two pyridine rings are bonded by an alkylene group having 1 to 8 carbon atoms or an alkenylene group having 2 to 8 carbon atoms.

**5.** An electrolyte for an electrolytic capacitor according to any one of claims 2 to 4, said electrolyte containing a quaternary ammonium compound which contains one or two pyridine rings in which to a nitrogen atom of a pyridine ring is added one alkyl group, alkenyl group or aryl group.

**6.** An electrolyte for an electrolytic capacitor according to any one of claims 2 to 5, wherein the alkyl groups and the alkenyl group have 1 to 15 carbon atoms each and the aryl group has 6 to 15 carbon atoms.

**7.** An electrolyte for an electrolytic capacitor according to claim 1, wherein said organic amine compound is a compound of the general formula,

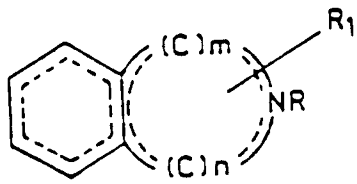

in which m is 0 or 1, m + n is 2 or 3, R1 indicates the presence or absence of an alkyl substituent having 1 to 3 carbon atoms, to form an N-heterocyclic-di-condensed ring compound, and R is hydrogen, or the nitrogen atom forms a tertiary amine or a quaternary ammonium with one or two alkyl groups having 1 to 5 carbon atoms and up 4 to 5 conjugated double bonds are contained in the ring.

**8.** An electrolyte for electrolytic capacitor according to claim 1, wherein the aprotic solvent is selected from N-methylformamide, N-dimethylformamide, N-ethylformamide, N-diethylformamide, N-methylacetamide, N-dimethylacetamide, N-ethylacetamide, N-diethylacetamide, γ-butyrolactone, N-methyl-2-pyrrolidone, ethylene carbonate, propylene carbonate, dimethyl sulfoxide, acetonitrile or a mixture of two or more thereof.

## Patentansprüche

**1.** Elektrolytkondensator, enthaltend ein Tetrafluorborat einer organischen Aminverbindung als gelösten Stoff, der in einem aprotischen Lösungsmittel gelöst ist.

**2.** Elektrolyt für einen Elektrolytkondensator nach Anspruch 1, worin die organische Aminverbindung darstellt:
(i) eine Verbindung, die einen oder zwei Pyridinringe - enthält, oder (ii) ein primäres, sekundäres oder tertiäres Amin oder eine quaternäre Ammoniumverbindung, worin in der Gruppe (i) an ein Stickstoffatom vier Gruppen gebunden sind, die aus 1 bis 4 Alkylgruppen, einer Alkenylgruppe oder einer Arylgruppe und 1 bis 3 Wasserstoffatomen ausgewählt sind.

**3.** Elektrolyt für einen Elektrolytkondensator nach Anspruch 2, worin die Verbindung, die einen oder zwei Pyridinringe enthält, eine Verbindung darstellt, in der mindestens ein an ein Kohlenstoffatom eines Pyridinrings gebundenes Wasserstoffatom durch eine Alkylgruppe, eine Alkenylgruppe, eine Arylgruppe oder durch Halogen ersetzt ist.

**4.** Elektrolyt für einen Elektrolytkondensator nach Anspruch 2 oder 3, worin die zwei Pyridinringe enthaltende Verbindung eine Dipyridylverbindung oder eine Verbindung darstellt, in der zwei Pyridinringe durch eine Alkylengruppe mit 1 bis 8 Kohlenstoffatomen oder eine Alkenylen Gruppe mit 2 bis 8 Kohlenstoffatomen verbunden sind.

**5.** Elektrolyt für einen Elektrolytkondensator nach einem der Ansprüche 2 bis 4, worin der Elektrolyt eine quaternäre Ammoniumverbindung enthält, welche einen oder zwei Pyridinringe enthält, worin an ein Stickstoffatom eines Pyridinrings eine Alkylgruppe, eine Alkenylgruppe oder eine Arylgruppe gebunden ist.

**6.** Elektrolyt für einen Elektrolytkondensator nach einem der Ansprüche 2 bis 5, worin die Alkylgruppen und die Alkenylgruppen jeweils 1 bis 15 Kohlenstoffatome und die Arylgruppe 6 bis 15 Kohlenstoffatome enthalten.

**7.** Elektrolyt für einen Elektrolytkondensator nach Anspruch 1, worin die organische Aminverbindung eine Verbindung der allgemeinen Formel

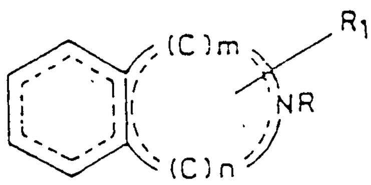

darstellt, worin m = 0 oder 1, m + n = 2 oder 3 bedeuten, $R_1$ die Anwesenheit oder Abwesenheit eines Alkylsubstituenten mit 1 bis 3 Kohlenstoffatomen andeutet, um eine N-heterocyclische, dikondensierte Ringverbindung zu bilden, und R Wasserstoff bedeutet oder das Stickstoffatom ein tertiäres Amin oder eine quaternäre Ammoniumverbindung mit einer oder zwei Alkylgruppen mit 1 bis 5 Kohlenstoffatomen bildet, und bis zu 4 bis 5 konjugierte Doppelbindungen im Ring enthalten sind.

8. Elektrolyt für einen Elektrolytkondensator nach Anspruch 1, worin das aprotische Lösungsmittel aus N-Methylformamid, N-Dimethylformamid, N-Ethylformamid, N-Diethylformamid, N-Methylacetamid, N-Dimethylacetamid, N-Ethylacetamid, N-Diehtylacetamid, γ-Butyrolacton, N-Methyl-2-pyrrolidon, Ethylencarbonat, Propylencarbonat, Dimethylsulfoxid, Acetonitril oder einem Gemisch aus zwei oder mehreren dieser Verbindungen ausgewählt ist.

## Revendications

1. Condensateur électrolytique contenant un tétrafluoroborate d'un composé d'amine organique en tant que soluté dissous dans un solvant aprotique.

2. Électrolyte pour un condensateur électrolytique selon la revendication 1, dans lequel ledit composé d'amine organique comprend (i) un composé contenant un ou deux noyaux pyridiques ou (ii) une amine primaire, secondaire ou tertiaire ou un composé d'ammonium quaternaire, dans lequel, dans le groupe (ii), à un atome d'azote sont liés quatre groupes choisis parmi 1 à 4 groupes alkyle, un groupe alkényle ou un groupe aryle et 1 à 3 atomes d'hydrogène.

3. Électrolyte pour un condensateur électrolytique selon la revendication 2, dans lequel le composé contenant un ou deux noyaux pyridiques est un composé dans lequel au moins un atome d'hydrogène lié à un carbone d'un noyau pyridique est remplacé par un groupe alkyle, un groupe alkényle, un groupe aryle ou un halogène.

4. Électrolyte pour un condensateur électrolytique selon la revendication 2 ou 3, dans lequel ledit composé contenant deux noyaux pyridiques comprend un composé dipyridyle ou un composé dans lequel deux noyaux pyridiques sont liés par un groupe alkylène comportant 1 à 8 atomes de carbone ou un groupe alkénylène comportant 2 à 8 atomes de carbone.

5. Électrolyte pour un condensateur électrolytique selon la revendication 2 à 4, ledit électrolyte contenant un composé d'ammonium quaternaire qui contient un ou deux noyaux pyridiques et dans lequel à un atome d'azote d'un noyau pyridique est ajouté un groupe alkyle, un groupe alkényle ou un groupe aryle.

6. Électrolyte pour un condensateur électrolytique selon l'une quelconque des revendications 2 à 5, dans lequel les groupes alkyle et le groupe alkényle possèdent chacun 1 à 15 atomes de carbone et le groupe aryle possède 6 à 15 atomes de carbone.

7. Électrolyte pour un condensateur électrolytique selon la revendication 1, dans lequel ledit composé d'amine organique est un composé répondant à la formule générale

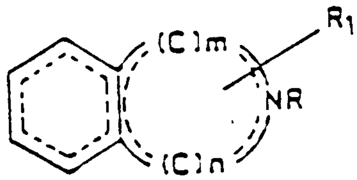

dans laquelle m est 0 ou 1, m + n est 2 ou 3, R1 désigne la présence ou l'absence d'un substituant alkyle comportant 1 à 3 atomes de carbone, pour former un composé cyclique N-hétérocyclique-di-condensé et R désigne l'hydrogène, ou bien l'atome d'azote forme une amine tertiaire ou un ammonium quaternaire avec un ou deux groupes alkyle contenant 1 à 5 atomes de carbone, et jusqu'à 4 à 5 doubles liaisons conjuguées sont contenues dans le noyau.

**8.** Électrolyte pour un condensateur électrolytique selon la revendication 1, dans lequel le solvant aproptique est choisi parmi le N-méthylformamide, le N-diméthylformamide, le N-éthylformamide, le N-diéthylformamide, le N-méthylacétamide, le N-diméthylacétamide, le N-éthylacétamide, le N-diéthylacétamide, la $\gamma$-butyrolactone, la N-méthyl-2-pyrrolidone, le carbonate d'éthylène, le carbonate de propylène, le diméthylsulfoxyde, l'acétonitrile ou un mélange de deux ou de plusieurs de ces substances.